Europäisches Patentamt

European Patent Office

Office européen des brevets

(11) Publication number: **0 312 317**
A2

# EUROPEAN PATENT APPLICATION

(21) Application number: **88309520.0**

(51) Int. Cl.⁴: **F16L 21/06**

(22) Date of filing: **12.10.88**

(30) Priority: **16.10.87 GB 8724333**

(43) Date of publication of application:
**19.04.89 Bulletin 89/16**

(84) Designated Contracting States:
**AT BE CH DE ES FR GR IT LI LU NL SE**

(71) Applicant: **VICTAULIC PLC**
**P.O. Box 13 46-48 Wilbury Way**
**Hitchin Hertfordshire SG4 0AP(GB)**

(72) Inventor: **Lewis, Nicholas**
**29 Silver Street**
**Stansted Essex(GB)**
Inventor: **Rex, Brian**
**6 Chasehill Road**
**Arlesey Bedfordshire(GB)**

(74) Representative: **Heath, Peter William Murray**
**FRY HEATH & CO. Seloduct House Station**
**Road**
**Redhill Surrey RH1 1NF(GB)**

(54) **Pipe couplings.**

(57) The invention provides a pipe coupling comprising an annular sleeve-like main body having at at least one end thereof at least one radially outwardly extending shoulder; a clamp member of annular sleeve-like configuration split by at least one segment, the clamp member being provided at one end with at least one radially inturned shoulder adapted in use to engage behind the radially outwardly extending shoulder of the main body so that the clamp member forms an extension therefrom; securing means engaging transversely across the or each axial slit in the clamp member so as to be capable of tightening the clamp member upon a pipe located therewithin when fastened.

## Pipe Couplings

This invention relates to pipe couplings and, more particularly, to pipe couplings for connecting together at least one plain ended pipe to another pipe which may be plain ended or may, for example, be flanged.

It is to be understood that the expression "pipe" as used herein includes a pipe-like member and a pipework fitting such as an elbow, 'T' junction, valve, etc.

Such couplings and flange adaptors have previously been in a number of forms. Thus, one kind of form has been a push-fit type of joint in which a pipe is inserted directly into a main body portion of the coupling, there being provided an 'O' ring for sealing purposes and a tapered self-locking element.

Such an arrangement suffers from the disadvantage that the seal is pressure sensitive and does not always provide adequate sealing capabilities when using badly scratched pipes, frequently encountered in certain field applications. Additionally the seal, by its interference with the outside diameter of the pipe creates difficulty in inserting the pipe within the body. Yet again, the locking element in practice has been found not to provide fully satisfactory restraint if pipe thickness tolerance is large and if end-load is experienced prior to pressurisation of the pipework system within which it is used.

An alternative system known previously uses pressure members around the inserted pipe to cause the sealing ring to force the pipe onto an internal ferrule provided with serrations and therefore intended to lock the pipe in position. Such a system is limited in size because of the excessive forces required to collapse the pipe onto the ferrule with large diameters if sufficient end-load capabilities are to be achieved. In addition, difficulty can be achieved in clamping tight fasteners about the sealing ring and pipe in restricted field operation situations. Yet again, the system suffers from the disadvantage that the clamping force used upon the pipe is absorbed to a large extent by the pipe itself so that the clamping force is far greater than the resultant positive locating effect of the serrated ferrule within the pipe.

It is an object of the present invention to overcome or at least substantially reduce the above mentioned problems and disadvantages.

In accordance with the present invention, there is provided a pipe coupling comprising an annular sleeve-like main body having at at least one end thereof at least one radially outwardly extending shoulder; a clamp member of annular sleeve-like configuration split by at least one axially extending slit to form at least one segment, the clamp member being provided at one end with at least one radially inturned shoulder adapted in use to engage behind the radially outwardly extending shoulder of the main body so that the clamp member forms an extension therefrom; securing means engaging transversely across the or each axial slit in the clamp member so as to be capable of tightening the clamp member upon a pipe located therewithin when fastened.

The shoulder of the main body and/or of the clamp member may extend completely around the body and/or member respectively.

In one alternative configuration a plurality of shoulders may be spaced around the periphery of the body and/or member such as to be capable of engaging with the shoulder or shoulders of the member or body respectively.

In one embodiment, a plurality of fingers are disposed around the periphery of the clamp member and extend axially outwardly thereof, each being provided at its outer end with a radially inwardly directed shoulder.

Where the pipe to be connected by means of the coupling in accordance with the invention is of a flexible or semi-flexible material such as a polymer plastics material, or is otherwise not capable of withstanding reasonable external force without radial inward displacement, a supporting ferrule may, in use, be located within the end of the pipe radially within the clamp member. The ferrule may comprise an extension of the main body or may, alternatively, be a separate member extending from within the main body to within the pipe when located in use within the clamp member.

Annular seal members may be located to prevent the leakage of materials contained within the pipe escaping through the joint with the coupling member. Where a ferrule is in use comprising an extension of the main body, the seal member may comprise an annular ring fitting within a groove of the ferrule extension disposed in use within the clamp member and adapted, in use, to seal against the inner surface of the pipe.

Where a separate ferrule member is used, at least two seal members may be provided, one locating, in use, between the radial outer surface of the ferrule and the pipe, radially inwardly of the clamp member, and the other on the radially outer surface of the ferrule within the main body of the coupling. In this latter disposition, the seal may be located either in the wall of the ferrule or in the internal wall of the main body as an annular sealing ring.

The main body may be provided with at least one radially outwardly extending shoulders at each end, so that clamp members may be located one at each end of the main body. Alternatively, the main body, for example, may comprise an extension from a flange with which it is integral or to which it is attached so that the coupling may be used for connecting a flanged pipe to a plain ended pipe located within the clamp member. In the latter case, where a separate ferrule is used, this may be provided with a radially outwardly extending flange adapted to fit behind the body flange. Since such a body flange will usually be provided with an annular disc-like sealing gasket when, in use, it is connected to a flanged pipe, a sealing ring between the periphery of the body of the ferrule and the main body may in some circumstances be dispensed with.

The clamp member is preferably provided on its inner surface with radially inwardly extending annular ridges so that, when the clamp member is tightened by the securing means upon the pipe located radially therewithin the pipe is positively supported upon the ferrule and the ribs bite into the outer periphery of the pipe and positively lock the pipe end within the coupling member.

In order that the invention may be more readily understood, embodiments thereof will now be described by way of example with reference to the accompanying drawings in which:-

Figure 1 is a partial sectional side elevation of a coupling between two plain ended pipes in accordance with the invention;

Figure 2 is a sectional elevation of part of a coupling member according to the invention for use between a flanged pipe and a plain ended pipe;

Figure 3 is an isometric view of the coupling of Figure 2;

Figure 4 is a sectional side elevation of part of a modification of the coupling of Figure 2;

Figure 5 is an isometric view of a modification of the clamp member of Figures 2, 3 and 4;

Figure 6 is a sectional side elevation of part of a coupling including the clamp member of Frigure 5; and

Figure 7 is a sectional side elevation of part of a further modification of Figure 2.

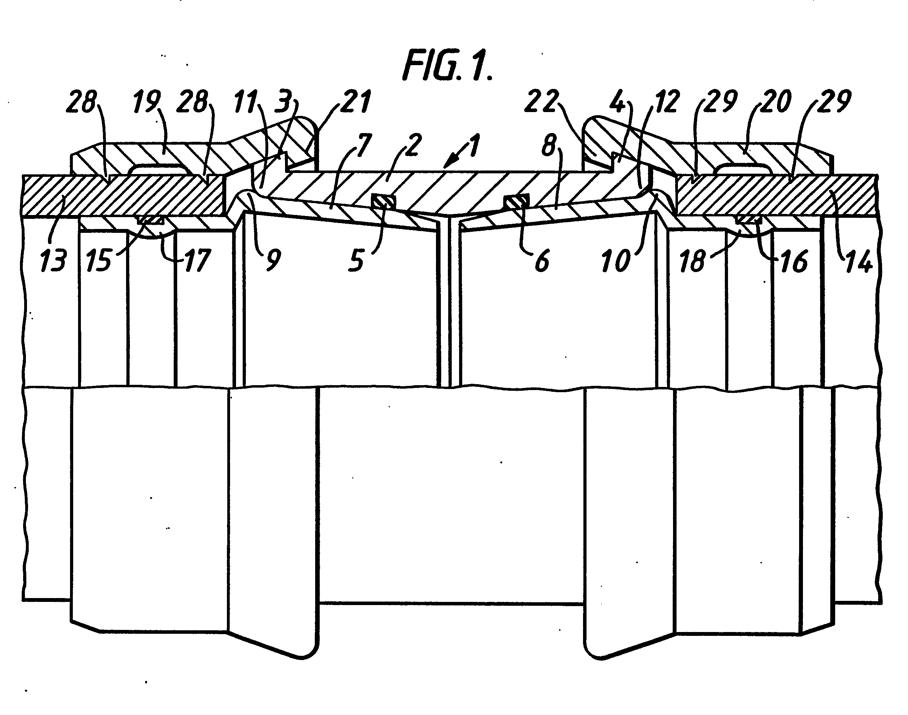

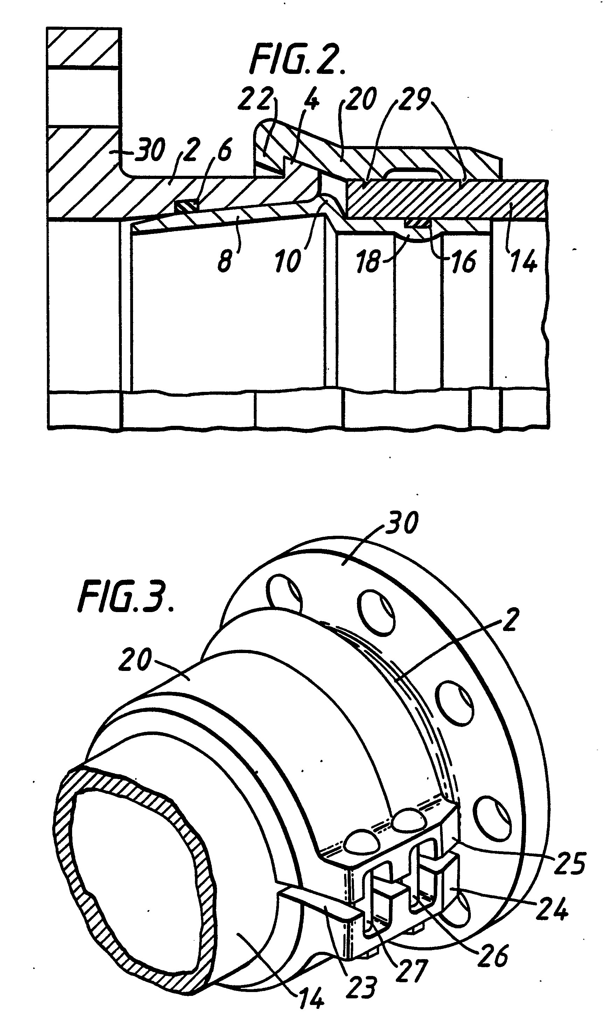

Referring now to Figure 1 of the drawings, it will be seen that the coupling 1 comprises a main body 2 which may be formed of a malleable material such as ductile iron, malleable iron, aluminium fabricated steel or plastics, for example, and is of annular sleeve-like configuration. At each end of the main body is a radially outwardly directed shoulder member 3, 4 and within the body 2 towards each end are located sealing rings 5, 6 either within grooves in the inner periphery of the body, or (not shown) within similar grooves in the ferrule. Disposed within the main body 2 at each end is a ferrule 7, 8 of sleeve-like annular configuration and formed of a malleable material such as ductile iron, malleable iron, plastics or fabricated steel material. Each ferrule 7, 8 engages and seals with the seal 5, 6 on the inner periphery of each end of the main body and has a shoulder 9, 10 adapted to engage and locate with the inside edge 11, 12 at each end of the body. Alternatively (but not shown), the ferrules may be axially located within the body by abutting against one or more internal stops protruding radially inwardly of the central portion of the body. Fitting, in use, upon the portion of each ferrule extending beyond the main body is a pipe 13, 14 which may, for example, be of a plastics material such as polyethelene. This pipe fits closely upon the ferrule and is sealed in its contact therewith by means of an elastomeric seal ring 15, 16 fitting within an outer annular groove 17, 18 of the ferrule and abutting against the inner periphery of the pipe. Located about the end of each pipe is a clamp member 19, 20 having, at its axially inward end a radially inwardly projecting shoulder 21, 22 engaging over the radially outwardly projecting shoulder 3, 4 of the main body member 2. The clamp member may be in one or more sections and, (as is illustrated in the embodiment of Figure 3) is in this embodiment formed as one segment by an axial slit 23, and having lugs 24, 25 for nut and bolt fastenings 26, 27 across the axial split.

The radially inner surface of each clamp member 19, 20 has a pair of sharp edged ribs 28, 29 for engagement with the pipe.

In practice, with the ferrules 9, 10 located within the body member and the clamp members 19, 20 loosely located upon the main body with their shoulder 21, 22 engaging with the shoulder 3, 4 of the main body, pipe 13, 14 are inserted between the ferrules and the clamp members which are then tightened by means of the fastenings 26, 27 so that the ribs 28, 29 on the internal surface thereof tightly engage and grip the pipes which are held against deformation by the ferrules. By this means, the pipes are sealed within and held against axial movement by means of the clamp members of the coupling.

In operation the ferrule 8 is inserted up to the shoulder 10 into the end of pipe 14 with sealing ring 16 in place.

The clamp member 20 is then placed over the pipe 14 and loosely positioned. The main body 2 is then pushed over the ferrule 8 with sealing ring 6 in place until the shoulder 10 is engaged, and the clamp member moved to its final position with shoulders 4 and 22 engaged.

The nut and bolt fasteners 26, 27 are then tightened so that the clamp member 20 tightly engages the pipe 14 and the ribs 29 dig into the wall of the pipe 14 to prevent axial movement of the pipe 14 which is held against collapse by the ferrule 8.

The arrangement of Figures 2 and 3 is closely similar to that of Figure 1 except that, in this case, the main body 2 only extends for connection at one end to a plain ended pipe 14, the other end being integral with an apertured flange 30 for connection to a flanged pipe (not shown).

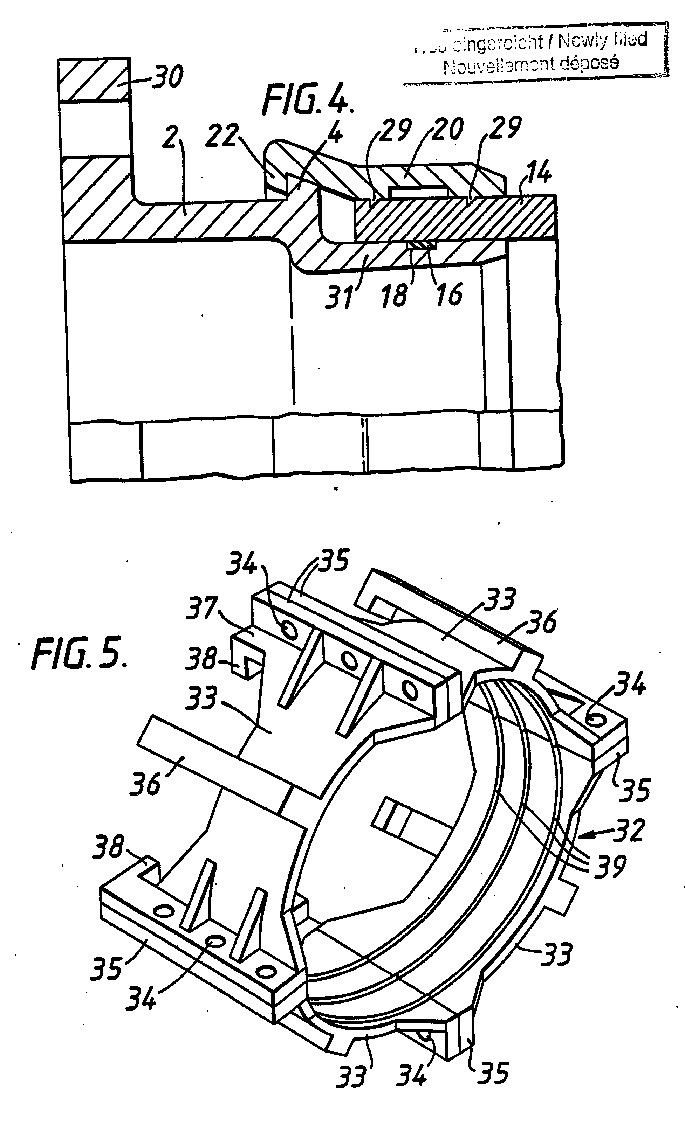

The arrangement of Figure 4 is similar to that of Figure 2, except that in this instance, instead of there being a separate independent ferrule member, an extension 31 of the main body 2 having a reduced internal and external diameter serves as the ferrule and supports the end of the plastic pipe 14 when located within the clamp member of the coupling.

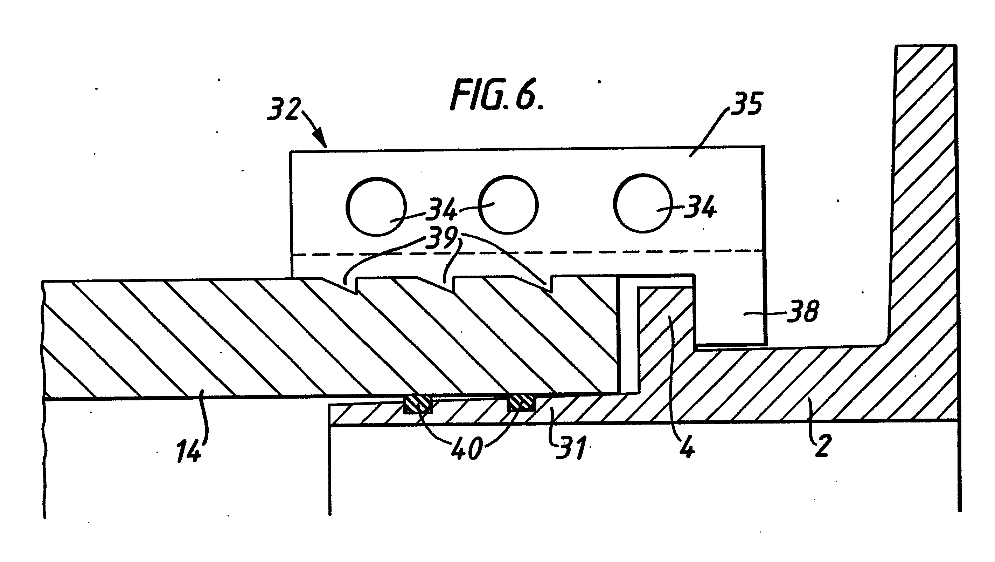

The modification of Figures 5 and 6 is similar to that of Figure 4 except that the clamp member 32 is constituted by four equal segments 33 connected together by nuts and bolts (not shown) passing through holes 34 in bolt lugs 35. The clamp member 33 is provided with four fingers 36 extending axially from the mid-point of the outer surface of each segment, and four fingers 37 associated with or constituted by the bolt lugs 35. All eight of the fingers 36, 37 are provided with radially inwardly extending shoulders 38, which are adapted to engage over the radially outwardly projecting shoulder 4 of the main body member 2.

The clamp member 33 is provided with annular gripping teeth 39 adapted to bite into the outer surface of the end of a pipe 14. Two 'O' ring seals 40 are provided between the pipe 14 and integral ferrule 31.

The clamp member of Figures 5 and 6 can be lighter in weight than those illustrated in Figures 1 and 4, using less material. Additionally the user of the coupling is able to see more clearly the disposition of the mating components during assembly, thus helping to ensure that correct alignment of the relevant components is maintained.

Again, the bolt torque on the assembled segments of the clamp member is more efficiently directed to provide load into gripping the pipe, thereby improving the performance of coupling.

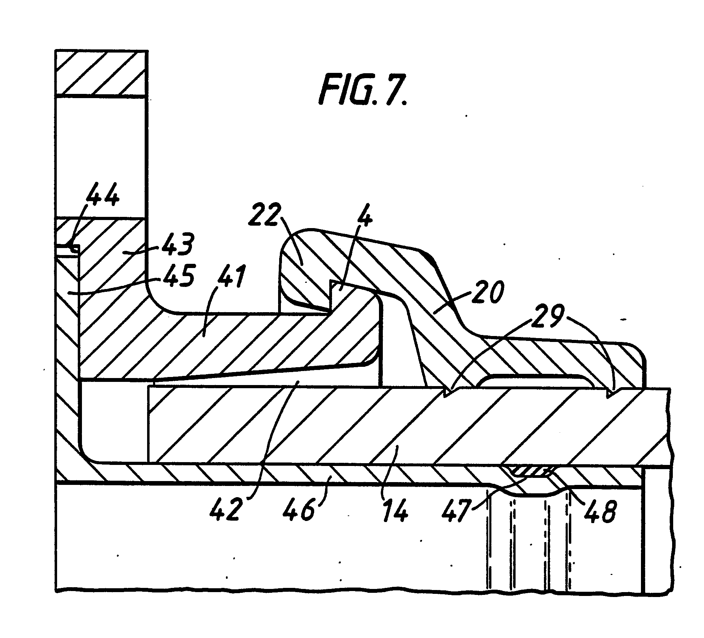

The arrange of Figure 7 is somewhat similar to that of Figure 2, but differs therefrom in a number of significant features. Thus, the main body 41 is either cast or fabricated with an internal bore 42 having a dimension which will allow the body to be pushed freely over the pipe 14. The internal bore 42 of the body 41 is plain and does not require any facility for sealing (e.g. an 'O' ring groove), for reasons explained below. The ferrule 46 of this arrangement is provided with a groove 47 for the positioning of a suitable elastomeric seal/ring 48. At the other end there is provided a flange 45 which is either integrally cast/moulded or welded to the ferrule. The flange 45 of the ferrule 46 locates in the corresponding recess 44 of the body and provides the seating face for mating with the corresponding mating flange (not shown) of the pipe to which the coupling is connected. The flange 43 of the body 41 is provided with an annular recess 44 for the location of the flange 45 of the separate ferrule 46. The clamp member 20 is generally cast with similar proportions to the clamp member of Figure 2 for example. The ferrule 46 may be manufactured from cast iron/aluminium, moulded plastic or fabricated steel to provide support for the pipe 14 during assembly.

The assembly technique for the arrangement of Figure 7 is as follows:- The clamp member 20 is pushed over the pipe 14 such that the locating ribs 29 are directed toward the pipe end as shown. The main body 41 is then pushed over the pipe 14 such that the flange 43 is towards the pipe end. The ferrule 46 with the elastomeric seal 48 already assembled is pushed into the bore of the pipe 14 to a position whereby the flange 45 of the ferrule 46 is in contact with, or in close proximity to, the pipe end. To complete the connection to a mating flange of a juxtaposed pipe (not shown) the main body 41 is pushed towards the pipe end, allowing the ferrule flange 45 to locate into the recess 44 of the body flange 43. The body is then pushed further until it connects with a mating flange of a pipe or valve for example and its sealing gasket. The flanges of the juxtaposed pipe and the main body are then connected together by means of standard fasteners. To complete the coupling assembly the clamp member is pushed along the pipe to the position where the locating shoulder rib 22 positioned behind the shoulder 4 of the main body 41. The fasteners (not shown) of the clamp member are then tightened to allow the clamp member to form around the pipe and positively grip onto the surface of the pipe.

It is to be appreciated that by utilising the gasket of the mating flange of the pipe or valve, for example, to which the coupling is to be connected in the arrangement of Figure 7, satisfactory sealing between the ferrule 46 and the main body is achieved, so that the coupling only requires a seal 47 for sealing between the ferrule 46 and the pipe 14.

The arrangement of Figure 7 enables considerable tolerance for pipe cutting and fitting errors.

By means of the invention, as illustrated, there is provided a coupling giving a leak-tight joint with a restraint for end load forces in any pipe system. In addition, a connection between plain ended plastics pipe and flanged pipes of different materials is provided. It is to be noted that flexibility of the clamp as provided by the fastening arrangement and the axial split or splits thereof enables the coupling to conform to varying pipe diameter and thickness tolerances. In the arrangement shown in Figures 1 to 4, easy access for tightening to just one side of the coupling is provided. Again, where an independent ferrule is used, pipes of varying wall thickness can readily be accommodated within the coupling by choice of an appropriately dimensioned ferrule. The provision of gripping ribs in the clamp member ensures maximum transference of fastening torque to pipe locking forces.

Typically the coupling of the invention may be adapted to accommodate pipe sizes varying from 60 mm to 1000 mm outside diameter.

## Claims

1. A pipe coupling comprising an annular sleeve-like main body having at at least one end thereof at least one radially outwardly extending shoulder; a clamp member of annular sleeve-like configuration split by at least one segment, the clamp member being provided at one end with at least one radially inturned shoulder adapted, in use, to engage behind the radially outwardly extending shoulder of the main body so that the clamp member forms an extension therefrom; securing means engaging transversely across the or each axial slit in the clamp member so as to be capable of tightening the clamp member upon a pipe located therewithin when fastened.

2. A pipe coupling as claimed in Claim 1 wherein the shoulder of the main body and/or of the clamp member extends completely around the body and/or member respectively.

3. A pipe coupling as claimed in Claim 1 wherein a plurality of shoulders are spaced around the periphery of the body and/or member such as to be capable of engaging with the shoulder or shoulders of the member or body respectively.

4. A pipe coupling as claimed in Claim 2 wherein the clamp member is provided around its periphery with a plurality of fingers extending axially outwardly thereof, each finger being provided at its outer end with a radially inwardly directed shoulder.

5. A pipe coupling as claimed in any one of the preceding claims for use with pipe formed of a flexible or semi-flexible material including a supporting ferrule adapted for location within the end of the pipe radially within the clamp member.

6. A pipe coupling as claimed in Claim 5 wherein the ferrule is an extension of the main body.

7. A pipe coupling as claimed in Claim 6 including an annular sealing ring fitting within a groove of the ferrule extension disposed in use within the clamp member and adapted, in use, to seal against the inner surface of the pipe.

8. A pipe coupling as claimed in Claim 5 wherein the ferrule comprises a separate member extending from within the main body to within the pipe when located in use within the clamp member.

9. A pipe coupling as claimed in Claim 8 including at least two annular sealing rings associated with each ferrule member, one locating in use between the radial outer surface of the ferrule and the pipe radially inwardly of the clamp member, and the other between the radially outer surface of the ferrule and the coupling.

10. A pipe coupling as claimed in any one of the preceding claims wherein the main body is provided with radially outwardly extending shoulders at each end, so that clamp members may be located one at each end of the main body.

11. A pipe coupling as claimed in any one of Claims 1 to 10 wherein the main body comprises an extension from a flange.

12. A pipe coupling as claimed in Claim 11 as dependent on Claim 8 wherein the ferrule is provided with a radially outwardly extending flange adapted to be located behind the flange of the body member.

13. A pipe coupling as claimed in any one of the preceding claims wherein the clamp member is provided with radially inwardly extending annular ridges.

# FIG.1.

**FIG.2.**

**FIG.3.**

FIG. 4.

30
2
22
4
29
20
29
14
31
18
16

FIG. 5.

34
35
37
33
36
38
33
36
38
35
34
35
32
39
33
33
34
35

FIG.6.

FIG. 7.